Europäisches Patentamt

European Patent Office

Office européen des brevets

(11) Veröffentlichungsnummer: **0 160 903**
A2

## (12) EUROPÄISCHE PATENTANMELDUNG

(21) Anmeldenummer: 85105118.5

(22) Anmeldetag: 26.04.85

(51) Int. Cl.⁴: **F 16 D 11/00**

(30) Priorität: 08.05.84 US 608133

(43) Veröffentlichungstag der Anmeldung:
13.11.85 Patentblatt 85/46

(84) Benannte Vertragsstaaten:
DE FR GB

(71) Anmelder: DEERE & COMPANY
1 John Deere Road
Moline Illinois 61265(US)

(72) Erfinder: Hartwig, Donald Richard
2013- 36th Street
Rock Island Illinois 61201(US)

(74) Vertreter: Sartorius, Peter et al,
DEERE & COMPANY European Office, Patent
Department Postfach 503 Steubenstrasse 36-42
D-6800 Mannheim 1(DE)

(54) Kupplungsvorrichtung.

(57) Eine Kupplungsvorrichtung zur Antriebsverbindung des Laufrades einer Sämaschine ist der Welle zum Antrieb von Arbeitsorganen zugeordnet. Die Kupplungsvorrichtung weist hierzu ein von Hand verstellbares Nockenrad (40) mit einer in der Breite abnehmenden Lippe (46) auf, die durch eine geneigt verlaufende Oberfläche (50) bergrenzt wird, an der ein Nockenbolzen mit seinem Nockenelement anliegt. Durch Drehen des Nockenrades (40) wird der Nockenbolzen zwischen einer Kupplungsstellung, in der eine Antriebsverbindung zwischen dem Laufrad und der Welle hergestellt wird, und einer entkuppelten Stellung verstellt, in der die Antriebsverbindung zur Welle unterbrochen ist.

Fig. 3

Fig. 4

EP 0 160 903 A2

## Kupplungsvorrichtung

Die Erfindung bezieht sich auf eine Kupplungsvorrichtung für ein landwirtschaftliches Arbeitsgerät, insbesondere Sämaschine, mit einer an einem Rahmen gelagerten Welle und einem ersten über ein Laufrad antreibbaren Antriebselement, das über ein gegen die Wirkung einer Feder verstellbares Mitnehmerelement mit einem zweiten die Welle antreibbaren Antriebselement antriebsverbindbar ist.

Es ist bereits eine Kupplungsvorrichtung der eingangs aufgeführten Art bekannt (US-A-2 563 186), die mit einem Laufrad zum Antrieb der einzelnen Säorgane ausgerüstet ist. Zwischen den Laufrädern und der Welle zum Antrieb der einzelnen Säorgane ist eine Ratsche vorgesehen, die eine Antriebsverbindung zwischen der Welle und den Laufrädern herstellt, wenn ein entsprechendes Mitnehmerelement in eine Kupplungsstellung verschwenkt worden ist und mit den Zähnen eines diesem zugeordneten Kupplungselementes in Eingriff bringbar ist. Hierdurch kann lediglich in eine Antriebsrichtung eine Drehverbindung zwischen der Welle und den Laufrädern geschaffen werden.

Demgegenüber liegt der Erfindung die Aufgabe zugrunde, die Kupplungsvorrichtung zur Antriebsverbindung zwischen den Arbeitsorganen und dem Laufrad derart auszubilden und anzuordnen, daß unabhängig von der Drehung des Laufrades eine Drehverbindung zwischen den Arbeitsorganen und dem Laufrad herstellbar ist. Diese Aufgabe ist dadurch gelöst worden, daß mit dem ersten oder dem zweiten Antriebselement ein drehbares Nockenrad koaxial und drehfest verbunden ist, das eine geneigt verlaufende Oberfläche aufweist, gegen die das Mitnehmerelement anliegt und über die das Mitnehmerelement bei Drehung des Nockenrades zwischen einer ausgefahrenen Stellung, in der die beiden Antriebselemente gekuppelt sind, und einer eingefahrenen Stellung verstellbar ist, in der die beiden Antriebselemente entkuppelt sind. Durch die Verwendung eines zwischen dem ersten und dem zweiten Antriebselement vorgesehenen Nockenrades läßt sich auf einfache Weise eine Antriebsverbindung für beide Drehrichtungen des Laufrades herstellen. Soll jedoch die Antriebsverbindung zwischen den Arbeitsorganen und dem Laufrad unterbrochen werden, so braucht lediglich von Hand aus das Nockenrad entsprechend so verstellt zu werden, daß das zugehörige Mitnehmerelement in eine unwirksame Stellung verstellt wird, in der die Antriebsverbindung zwischen dem Nockenrad und dem zweiten Antriebselement unterbrochen ist. Hierzu ist in vorteilhafter Weise das Nockenrad mit einer Oberfläche, die als Nockenoberfläche ausgebildet sein kann, ausgerüstet, die bei Drehung des Nockenrades eine entsprechende Verstellung des Mitnehmerelementes herbeiführt, das gegen die Wirkung der Feder verstellbar ist. Soll wieder die Antriebsverbindung zwischen dem Laufrad bzw. dem ersten Antriebselement und dem zweiten Antriebselement hergestellt werden, so braucht das Nockenrad lediglich in entgegengesetzter Richtung verstellt zu werden, um die Antriebsverbindung zwischen den beiden Antriebselementen wiederherzustellen. Hierzu ist es ferner vorteilhaft, daß das erste Antriebselement als Laufradnabe ausgebildet ist, die fest mit dem Laufrad verbunden ist, und daß das Mitnehmerelement ein Nockenbolzen ist, der in dem Nabenflansch oder der Laufradnabe des Laufrades axial verschiebbar gelagert ist.

In weiterer Ausgestaltung der Erfindung ist es vorteilhaft, daß das Nockenrad einen Nockenring aufweist, der mit einer innenliegenden Lippe ausgestattet ist, die eine in Achsrichtung zeigende Oberfläche aufweist, und daß die Lippe aus einem schmalen Lippenteil und einem breiten Lippenteil gebildet ist und die beiden Lippenteile durch die mit Bezug auf die Drehachse des Nockenringes schräg verlaufende Oberfläche verbunden sind. Ferner ist es vorteilhaft, daß neben dem breiten Lippenteil zum Einrasten des Nockenbolzens eine Aussparung vorgesehen ist. Da die Lippe mit entsprechenden Rastelementen zur Aufnahme des Nockenbolzens ausgestattet ist, läßt sich das Nockenrad in bestimmten Stellungen feststellen, so daß ein unbeabsichtigtes Verstellen des Nockenrades verhindert wird. Hierzu ist es ferner vorteilhaft, daß der Aussparung ein erster und mit Abstand dazu ein zweiter Anschlag zugeordnet ist. Außerdem ist es vorteilhaft, daß das Nockenrad auf der Laufradnabe oder auf dem Nabenflansch des Laufrades drehbar lagert und beide untereinander fluchtende Bohrungen zur verschiebbaren Aufnahme von zwei Nockenbolzen aufweisen, die mittels je einer Feder in die ausgefahrene Stellung bringbar sind und je nach Stellung eines koaxial an das Nockenrad ankuppelbaren Kettenrades zum Antrieb der Welle in im Zahnrad vorgesehene Bohrungen einrastbar sind, und daß der Nockenbolzen endseitig ein Nockenelement aufweist, dessen Durchmesser größer ist als der übrige zylindrische Teil des Nockenbolzens, und daß er an der Oberfläche der Lippe entlanggleitet, wenn das Nockenrad gedreht wird, und dadurch der Nockenbolzen in eine Stellung bringbar ist, in der das Kettenrad von dem Nabenflansch bzw. der Laufradnabe abgekuppelt ist. Ferner ist es vorteilhaft, daß die in der Lippe des Nockenrades vorgesehenen Aussparungen bzw. Raststellen für den Nockenbolzen mit Abstand zueinander angeordnet sind und diametral gegenüberliegen. Durch die Verwendung von zwei Nockenbolzen wird auf einfache Weise eine exakte Arretierung des Nockenrades in den gewünschten Stellungen gewährleistet, wobei durch einfaches Drehen des Nockenrades die Stellung des Nockenrades erreicht werden kann, in der die Antriebsverbindung zwischen den beiden Antriebselementen unterbrochen wird. Durch die allmählich breiter werdende Lippe und die hierdurch ansteigende Führungsfläche zur Verstellung des Nockenbolzens wird mit geringem Kraftaufwand eine Verstellung des Nockenbolzens gegen die Wirkung der Feder ermöglicht.

Im folgenden wird die Erfindung anhand von lediglich einen Ausführungsweg darstellenden Zeichnungen näher erläutert. Es zeigen:

Fig. 1 eine perspektivische Darstellung eines Laufrades einer Sämaschine,

Fig. 2 eine ähnliche Ansicht wie in Fig. 1, jedoch mit der zugehörigen Antriebsvorrichtung,

Fig. 3 eine Schnittdarstellung entlang der Linie 3 - 3 gemäß Fig. 2,

Fig. 4 eine perspektivische Darstellung eines Nockenrades der vorliegenden Erfindung,

Fig. 5 eine Seitenansicht des Nockenrades,

Fig. 6 einen Schnitt entlang der Linie 6 - 6 gemäß Fig. 5 mit detaillierter Darstellung der inneren Lippe des Nockenrades,

Fig. 7 einen Teilschnitt entlang der Linie 7 - 7 gemäß Fig. 3,

Fig. 8 einen Teilschnitt entlang der Linie 8 - 8 gemäß Fig. 7,

Fig. 9 eine Teilansicht ähnlich wie in Fig. 7, wobei das Nockenrad in eine Stellung gedreht ist, in der der Antriebsbolzen sich in einer Stellung befindet und durch den breiten Teil der inneren Lippe getragen wird,

Fig. 10     einen Schnitt entlang der Linie 10 - 10
gemäß Fig. 9, wobei der Antriebsbolzen zurückgezogen in eine entkuppelte Stellung
verstellt worden ist,

Fig. 11     einen Schnitt entlang der Linie 11 - 11
gemäß Fig. 3, wobei der Antriebsbolzen sich
in einer eingerückten Stellung befindet.

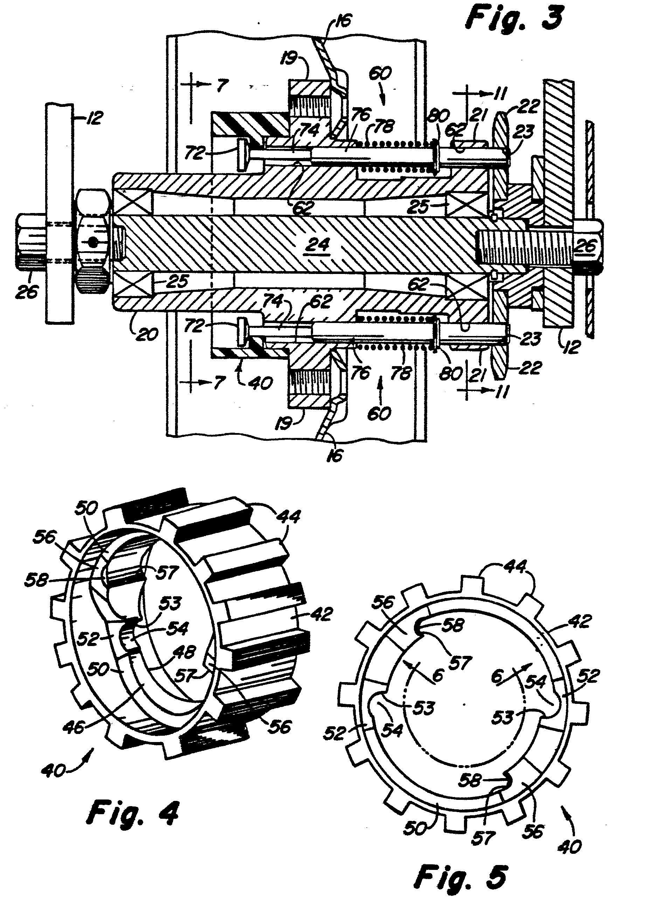

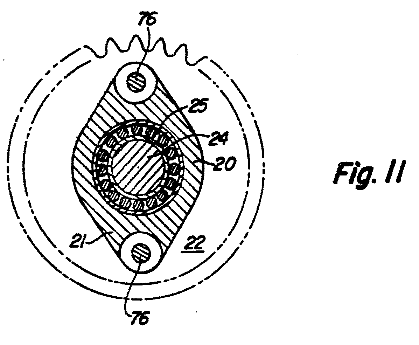

In der Zeichnung ist mit 10 ein Hauptrahmen bezeichnet,
der Hauptrahmen einer landwirtschaftlichen Arbeitsmaschine,
beispielsweise einer Sämaschine, sein kann und an den zwei
sich nach unten erstreckende Tragarme 12 zur Aufnahme von
Laufrädern 14 vertikal schwenkbar angeschlossen sind. Das
Laufrad 14 ist mit einer Felge 16 ausgerüstet, die mittels
Schraubenbolzen 18 an eine Laufradnabe 20 angeschlossen
ist, die mit einem Nabenflansch 19 und 21 ausgestattet ist.
Die Laufradnabe 20 zusammen mit einem zweiten Antriebselement oder einem Zahnrad 22 ist mittels Wälzlagern 25 (siehe
Fig. 3 und 11) auf einer Achse 24 gelagert. Die Achse 24
erstreckt sich zwischen den unteren Enden der Tragarme 12
und ist an diesen mittels Schraubenbolzen 26 gesichert.
Ist das Zahnrad 22 mit der Laufradnabe 20 gekuppelt, so
wird das Zahnrad 22, wenn die in der Zeichnung nicht dargestellte Maschine sich mit dem Hauptrahmen 10 über das
Feld bewegt, über das Laufrad 14 angetrieben. Der Antrieb
des Zahnrades 22 wird mittels einer Kette 32 auf ein auf
einer Welle 30 gelagertes Kettenrad 28 weitergeleitet. Der
Antrieb der Welle 30 stellt einen Antrieb für die anzutreibenden Teile des Arbeitsgerätes dar, beispielsweise für die
in der Zeichnung nicht dargestellten Säeinrichtungen, die
am Hauptrahmen 10 angeordnet sein können.

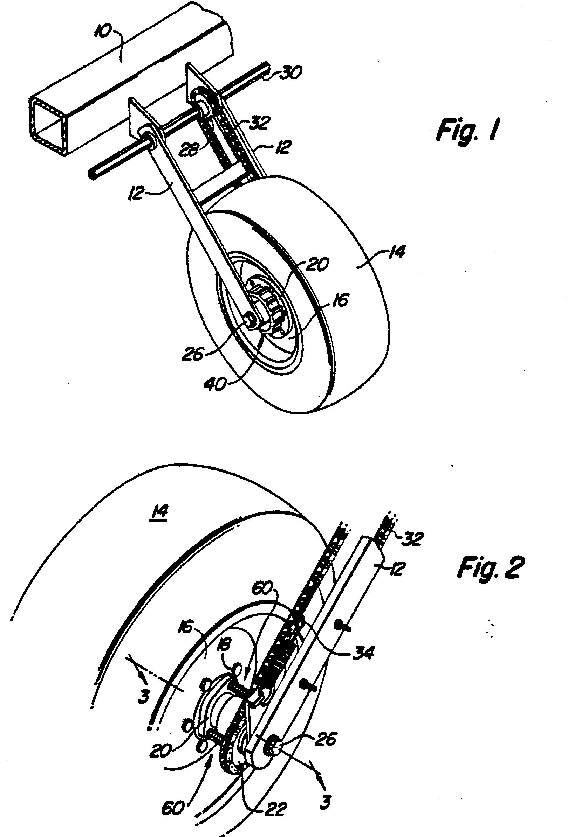

Die Vorrichtung zur Unterbrechung des Antriebes der vorliegenden Erfindung weist ein drehbar gelagertes Nockenrad 40
auf, das an einer Seite der Laufradnabe 20 (siehe Fig. 1) drehbar gelagert ist. Wie insbesondere aus den Figuren 4 bis 6 hervorgeht, weist das Nockenrad 40 einen Nockenring 42 auf, der mit zahlreichen sich nach außen erstreckenden Nocken bzw. Zähnen ausgerüstet ist. An der Innenseite des Nockenringes befindet sich eine Lippe 46, die eine innere Kante 48 aufweist, die parallel zur Kante des Nockenringes 42 verläuft. Die Lippe 46 weist ferner eine äußere Kante auf, die durch nach innen geneigt verlaufende Oberflächen 50 gebildet wird. Die nach innen gerichteten Oberflächen 50 erstrecken sich zwischen einem schmalen, flach ausgebildeten Lippenteil 52 und einem breiten, ebenfalls flach ausgebildeten Lippenteil 56. Der schmal ausgebildete Lippenteil 52 weist einen nach innen gerichteten unteren Anschlag 53 und eine Aussparung 54 auf. Der breite Lippenteil 56 weist ebenfalls einen nach innen gerichteten oberen Anschlag 57 sowie eine nach außen zeigende Aussparung 58 auf. Die äußere Lippe 46 zwischen dem unteren Anschlag 53 und dem oberen Anschlag 57 bildet eine Arbeitsoberfläche, auf der ein Nockenelement 72 abläuft, das Teil einer Nockenbolzenvorrichtung 60 ist.

Wie aus Fig. 3 hervorgeht, weist die Nockenbolzenvorrichtung 60 einen Nockenbolzen 70 auf, der aus einem Kopf- bzw. Nockenelement 72, einem schlanken Bolzenabschnitt 74 und einem im Durchmesser größeren, relativ langen Bolzenabschnitt 76 gebildet ist. Der Bolzenabschnitt 76 ist in einer Bohrung 62 aufgenommen, die im Nabenflansch 19 und 21 vorgesehen ist. Der Bolzenabschnitt 76 erstreckt sich axial durch den Nabenflansch 21 und rastet wahlweise in die Bohrung 23 des Zahnrades 22 ein, die mit den Bohrungen 62 des Nabenflansches 21 in Deckung bringbar ist, um die Laufradnabe 20 mit dem Zahnrad 22 antriebsmäßig zu verbinden. In dem Zwischenraum der Nabenflansche 19 und 21 befindet sich eine Druckfeder 78, die koaxial auf dem Bolzenabschnitt 76 angeordnet ist. Ein Sicherungsring 80 ist auf dem Bolzenabschnitt 74 vorgesehen, so daß sich die

DEERE & COMPANY
EUROPEAN OFFICE

0160903

Druckfeder 78 einerseits gegen den Sicherungsring 80, andererseits gegen den Nabenflansch 19 abdrücken kann. Somit wird der Nockenbolzen 70 mittels der Feder 78 gegen das Zahnrad 22 bzw. in die entsprechende Bohrung 23 des Zahnrades 22 gedrückt.

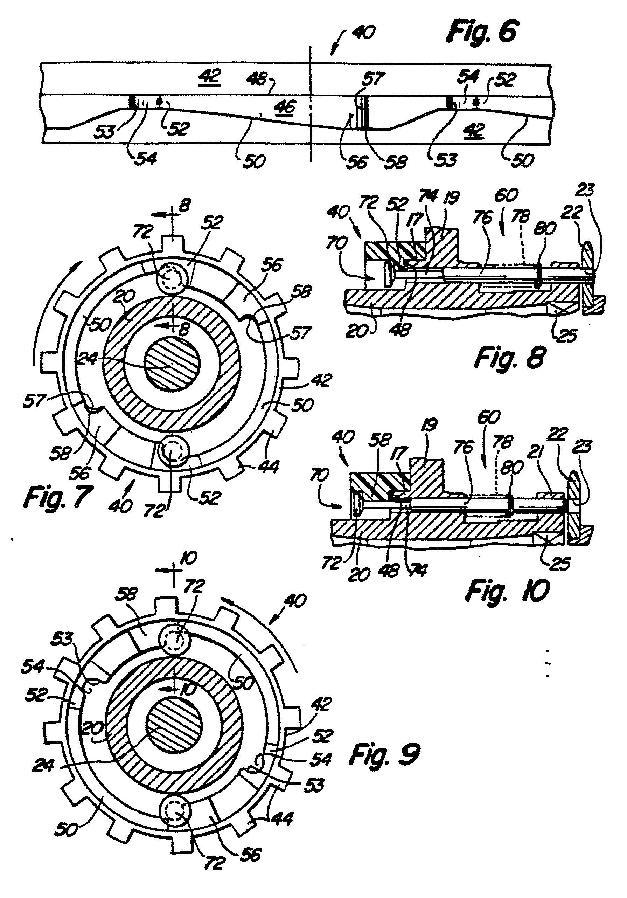

Das Nockenrad 40 ist an einer Seite der Laufradnabe 20 angeordnet, so daß bei Drehung des Nockenrades 40 die innere Kante 48 eine konzentrische Lippe 17 des Nabenflansches 19 berührt (Fig. 8 und 10). Das Nockenelement 72 liegt gegen die äußere Lippe 46 an, um das Nockenrad 40 in seiner Position zu halten, das koaxial mit Bezug auf die Laufradnabe 20 dreht. Der Bolzenabschnitt 74 des Nockenbolzens 70 liegt gegen die Oberfläche der Lippe 46 an, wenn das Nockenrad 40 im Bereich zwischen dem oberen und unteren Anschlag 53 und 57 dreht. Ferner rastet das Nockenelement 72 in die Aussparung 58 in der Nähe des Anschlages 57 ein, um das Nockenrad 40 in dieser Stellung festzusetzen.

Im Arbeitseinsatz wird das Nockenrad 40 in die gewünschte Stellung gedreht, um die Laufradnabe 20 und das Zahnrad 22 los- bzw. anzukuppeln. Wenn der Nockenbolzen 70 sich in seiner ausgefahrenen bzw. eingerückten Stellung befindet und die Laufradnabe 20 sowie das Zahnrad 22 gemäß Fig. 7 antriebsmäßig verbunden sind, dann wird das Nockenrad 40 einfach gemäß Pfeil (siehe Fig. 7) gedreht, um den Nockenbolzen 70 zurückzuziehen und das Zahnrad 22 abzukuppeln. Ist das Zahnrad 22 auf diese Weise gedreht worden, so liegt das Kopf- bzw. Nockenelement 72 gegen die geneigt verlaufende Oberfläche 50 an. Der Nockenbolzen 70 wird somit in seine zurückgezogene Stellung gemäß Fig. 9 und 10 verstellt. In der ausgerückten Stellung ist das Nockenrad 40 durch Kontakt des Nockenelementes 72 festgelegt, da der Lippenteil 56 und die Aussparung 58 durch die Druckfeder 78 beaufschlagt sind.

Der Wechsel von der entkuppelten Stellung zu der gekuppelten Stellung gemäß Fig. 7 und 8 erfolgt durch Drehen des Nockenrades 40 gemäß Pfeilrichtung (Fig. 9). Um die Kuppelstellung zu erreichen, braucht die Bedienungsperson das Gerät lediglich nach vorne zu bewegen, um das Laufrad 14 anzutreiben, bis der Nockenbolzen 70 mittels der Kraft der Druckfeder 78 in die Bohrung 23 des Zahnrades 22 einrastet.

## Patentansprüche

1. Kupplungsvorrichtung für ein landwirtschaftliches Arbeitsgerät, insbesondere Sämaschine, mit einer an einem Rahmen gelagerten Welle (30) und einem ersten über ein Laufrad (14) antreibbaren Antriebselement (Laufradnabe 20), das über ein gegen die Wirkung einer Feder (78) verstellbares Mitnehmerelement (Nockenbolzen 70) mit einem zweiten die Welle (30) antreibbaren Antriebselement (Zahnrad 22) antriebsverbindbar ist, dadurch gekennzeichnet, daß mit dem ersten oder dem zweiten Antriebselement (20, 22) ein drehbares Nockenrad (40) koaxial und drehfest verbunden ist, das eine geneigt verlaufende Oberfläche (50) aufweist, gegen die das Mitnehmerelement (Nockenbolzen 70) anliegt und über die das Mitnehmerelement bei Drehung des Nockenrades (40) zwischen einer ausgefahrenen Stellung, in der die beiden Antriebselemente (20, 22) gekuppelt sind, und einer eingefahrenen Stellung verstellbar ist, in der die beiden Antriebselemente (20, 22) entkuppelt sind.

2. Kupplungsvorrichtung nach Anspruch 1, dadurch gekennzeichnet, daß das erste Antriebselement als Laufradnabe (20) ausgebildet ist, die fest mit dem Laufrad (14) verbunden ist.

3. Kupplungsvorrichtung nach Anspruch 1 oder 2, dadurch gekennzeichnet, daß das Mitnehmerelement ein Nockenbolzen (70) ist, der in dem Nabenflansch (19) oder der Laufradnabe (20) des Laufrades (14) axial verschiebbar gelagert ist.

4. Kupplungsvorrichtung nach einem oder mehreren der vorherigen Ansprüche, dadurch gekennzeichnet, daß das Nockenrad (40) einen Nockenring (42) aufweist, der mit einer innenliegenden Lippe (46) ausgestattet ist, die eine in Achsrichtung zeigende Oberfläche (50) aufweist.

5. Kupplungsvorrichtung nach einem oder mehreren der vorherigen Ansprüche, dadurch gekennzeichnet, daß die Lippe (46) aus einem schmalen Lippenteil (52) und einem breiten Lippenteil (56) gebildet ist und die beiden Lippenteile durch die mit Bezug auf die Drehachse des Nockenringes schräg verlaufende Oberfläche (50) verbunden sind.

6. Kupplungsvorrichtung nach einem oder mehreren der vorherigen Ansprüche, dadurch gekennzeichnet, daß neben dem breiten Lippenteil (56) zum Einrasten des Nockenbolzens (70) eine Aussparung (58) vorgesehen ist.

7. Kupplungsvorrichtung nach einem oder mehreren der vorherigen Ansprüche, dadurch gekennzeichnet, daß der Aussparung (58) ein erster und mit Abstand dazu ein zweiter Anschlag (53, 57) zugeordnet ist.

8. Kupplungsvorrichtung nach einem oder mehreren der vorherigen Ansprüche, dadurch gekennzeichnet, daß das Nockenrad (40) auf der Laufradnabe (20) oder auf dem Nabenflansch (19) des Laufrades (14) drehbar lagert und beide untereinander fluchtende Bohrungen zur verschiebbaren Aufnahme von zwei Nockenbolzen (70) aufweisen, die mittels je einer Feder (78) in die ausgefahrene Stellung bringbar sind und je nach Stellung eines koaxial an das Nockenrad ankuppelbaren Kettenrades (28) zum Antrieb der Welle (30) in im Zahnrad (22) vorgesehene Bohrungen (23) einrastbar sind.

9. Kupplungsvorrichtung nach einem oder mehreren der vorherigen Ansprüche, dadurch gekennzeichnet, daß der Nockenbolzen (70) endseitig ein Nockenelement (72) aufweist, dessen Durchmesser größer ist als der übrige zylindrische Teil des Nockenbolzens, und daß er an der Oberfläche (50) der Lippe entlanggleitet, wenn das Nockenrad (40) gedreht wird, und dadurch der Nokkenbolzen in eine Stellung bringbar ist, in der das Kettenrad (28) von dem Nabenflansch (19) bzw. der Laufradnabe (20) abgekuppelt ist.

10. Kupplungsvorrichtung nach einem oder mehreren der vorherigen Ansprüche, dadurch gekennzeichnet, daß die in der Lippe (46) des Nockenrades vorgesehenen Aussparungen (54, 58) bzw. Raststellen für den Nockenbolzen (70) mit Abstand zueinander angeordnet sind und diametral gegenüberliegen.

Fig. 1

Fig. 2

L14

**Fig. 3**

**Fig. 4**

**Fig. 5**

0160903

**Fig. 6**

**Fig. 7**

**Fig. 8**

**Fig. 9**

**Fig. 10**

Fig. 11